# EUROPEAN PATENT SPECIFICATION

(11) **EP 4 524 273 B1**
(45) Date of publication and mention of the grant of the patent: **14.10.2026**
(21) Application number: 23937756.7
(22) Date of filing: 27.07.2023
(51) Int. Cl.: C22B 3/08, C22B 3/44, C22B 3/00

(54) **ACID-ORE RATIO DYNAMIC OPTIMIZATION METHOD FOR HIGH-PRESSURE LEACHING OF LATERITE NICKEL ORE**
DYNAMISCHES OPTIMIERUNGSVERFAHREN FÜR DAS SÄURE-ERZ-VERHÄLTNIS ZUR HOCHDRUCKAUSLAUGUNG VON LATERITNICKELERZ
PROCÉDÉ D'OPTIMISATION DYNAMIQUE DE RAPPORT ACIDE-MINERAI POUR LIXIVIATION À HAUTE PRESSION DE MINERAI DE NICKEL LATÉRITIQUE

(43) Date of publication of application: 19.03.2025
(73) Proprietor: PT ESG New Energy Material, Jakarta Selatan, Provinsi DKI Jakarta 12950 (ID); PT QMB New Energy Materials, Jakarta Selatan, Provinsi DKI Jakarta, 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: BRODJONEGORO, Satryo Soemantri, Provinsi DKI Jakarta 12950 (ID); XU, Kaihua, Shenzhen, Guangdong 518101 (CN); WANG, Yi, Provinsi DKI Jakarta 12950 (ID); WANALDI, Rizky, Provinsi DKI Jakarta 12950 (ID); AJI, Tegar Mukti, Provinsi DKI Jakarta 12950 (ID); KRISTIYANTO, Evan Wahyu, Provinsi DKI Jakarta 12950 (ID); HASIBUAN, Andi Syaputra, Provinsi DKI Jakarta 12950 (ID); RAHMADI, Piyan, Provinsi DKI Jakarta 12950 (ID)
(74) Representative: Santarelli
(86) International application number: PCT/CN2023/109608
(87) International publication number: WO 2025/020176

(56) References cited:
- EP-A1- 2 389 457
- EP-A1- 3 249 061
- CN-A- 103 614 571
- CN-A- 104 762 493
- CN-A- 109 837 386
- CN-A- 113 564 383
- CN-A- 113 999 989
- PURWANTO HADI ET AL: "Recovery of Nickel from Selectively Reduced Laterite Ore by Sulphuric Acid Leaching", vol. 43, no. 2, 31 December 2003 (2003-12-31), pages 181 - 186, XP093301731, Retrieved from the Internet <URL:https://www.jstage.jst.go.jp/article/isijinternational1989/43/2/43_2_181/_pdf> [retrieved on 20250801]

## Description

### FIELD OF THE DISCLOSURE

The disclosure relates to the technical field of high-pressure leaching of laterite nickel ore, and in particular, to a dynamic optimization method for acid-to-ore ratio in high-pressure leaching of laterite nickel ore.

### BACKGROUND

Hydrometallurgical Processing mainly includes atmospheric leaching and pressurized leaching. Pressurized leaching process generally includes firstly making an ore into a pulp, then preheating the pulp, acid leaching the preheated pulp in a high-pressure autoclave, and then lowering a temperature and pressure of the pulp, neutralizing and separating the pulp, and purifying leach slurry. EP3249061A1 discloses a sulfuric acid adding facility and operation method therefor. Purwanto Hadi et al. (2003) ISIJ INTERNATIONAL, vol.43, no. 2, pages 181-186 published Recovery of Nickel from Selectively Reduced Laterite Ore by Sulphuric Acid Leaching.

During the pressurized leaching process, the acid-to-ore ratio is an important control parameter. If the acid-to-ore ratio is too low, metal ions of Ni, Co and Mn in the laterite nickel ore may be leached too slowly, resulting in a low production efficiency. However, an excessive acid-to-ore ratio may lead to an excessive residual acid content after leaching, which results in more using of neutralizer and precipitators in subsequent pre-neutralization and precipitation processes, and an excessive quantity of sulfuric acid in a raw material causes an unnecessary increase in costs. Therefore, in a high-pressure acid leaching process of laterite nickel ore, an optimal acid-to-ore ratio exists, which can ensure the leaching rate of metal ions of Ni, Co, and Mn, and also void unnecessary acid waste.

Currently, a determination of the optimal acid-to-ore ratio is mainly performed by using a laboratory pilot experiment. However, because there is a difference in processes of mass transfer and heat transfer between a pilot apparatus and a large autoclave, the optimal acid-to-ore ratio determined by the pilot apparatus is also different from the optimal acid-to-ore ratio in the large autoclave. The optimal acid-to-ore ratio under an operating condition of the large autoclave cannot be completely deduced by using experimental data of the pilot apparatus. In addition, acid consumptions in the leaching process of different metals are different, and the optimal acid-to-ore ratio is also a variable value that fluctuates with feed ore composition and pulp concentration. However, in a current high-pressure acid leaching process, a fixed acid-to-ore ratio is usually used or only adjusted by means of manual judgment. Therefore, in an actual operation process, the acid-to-ore ratio may be too high or too low, that may result technical problems of an unnecessary cost increasing or a production efficiency reduction.

### SUMMARY

The purpose of this disclosure is to provide a dynamic optimization method for acid-to-ore ratio in high-pressure leaching of laterite nickel ore, thereby solving technical problems that the high-pressure acid-to-ore ratio is too high or too low during actual operation, resulting in unnecessary cost increasing or production efficiency decrease.

In order to solve the above technical problems, this invention provides a dynamic optimization method for acid-to-ore ratio in high-pressure leaching of laterite nickel which is defined in appended claim 1.

In some embodiments, comparing the theoretical leaching rate of nickel with the target leaching rate of nickel; if the theoretical leaching rate of nickel is not equal to the target leaching rate of nickel, adjusting the set flow rate of the sulfuric acid, repeatedly performing the foregoing steps until the theoretical leaching rate of nickel is equal to the target leaching rate of nickel, comprises:
if the theoretical leaching rate of nickel is greater than the target leaching rate of nickel, reducing the flow rate of sulfuric acid; and
if the theoretical leaching rate of nickel is less than the target leaching rate of nickel, increasing the flow rate of sulfuric acid.

Compared with existing technologies, the beneficial effect of this disclosure is: providing a high-pressure acid leaching mathematical model and an optimal acid-to-ore ratio calculation method, calculating the optimal acid-to-ore ratio by inputting a real-time feed ore component into the high-pressure acid leaching mathematical model, a sulfuric acid addition flow of a high-pressure leaching link of the clay nickel ore can be dynamically adjusted according to the feed mineral component, so that a high-pressure acid leaching process is always in a dynamic optimal state with the optimal acid-to-ore ratio. Compared with the conventional method for optimizing the acid-to-ore ratio through a pilot experiment, the method has advantages of fast response and accurate optimization.

### BRIEF DESCRIPTION OF THE DRAWINGS

Accompanying drawings are for providing further understanding of embodiments of the disclosure. The drawings form a part of the disclosure and are for illustrating the principle of the embodiments of the disclosure along with the literal description. Apparently, the drawings in the description below are merely some embodiments of the disclosure, a person skilled in the art can obtain other drawings according to these drawings without creative efforts. In the figures:
FIG. 1 is a schematic flowchart of the dynamic optimization method for acid-to-ore ratio in high-pressure leaching of laterite nickel ore, according to an embodiment of the disclosure.
FIG. 2 is a flowchart of an algorithm of the dynamic optimization method for acid-to-ore ratio in high-pressure leaching of laterite nickel ore, according to an embodiment of the disclosure.
FIG. 3 is a flowchart of step S3 shown in FIG. 1, according to an embodiment of the disclosure.
FIG. 4 is a flowchart of step S34 shown in FIG. 3, according to an embodiment of the disclosure.
FIG. 5 is schematic diagrams of experimental results of parallel experiments under multiple acid-to-ore ratios by using a small test apparatus.

### DETAILED DESCRIPTION OF PREFERRED EMBODIMENTS

The technical solutions in the embodiments of the application will be described clearly and completely in combination with the drawings in the embodiments of this disclosure.

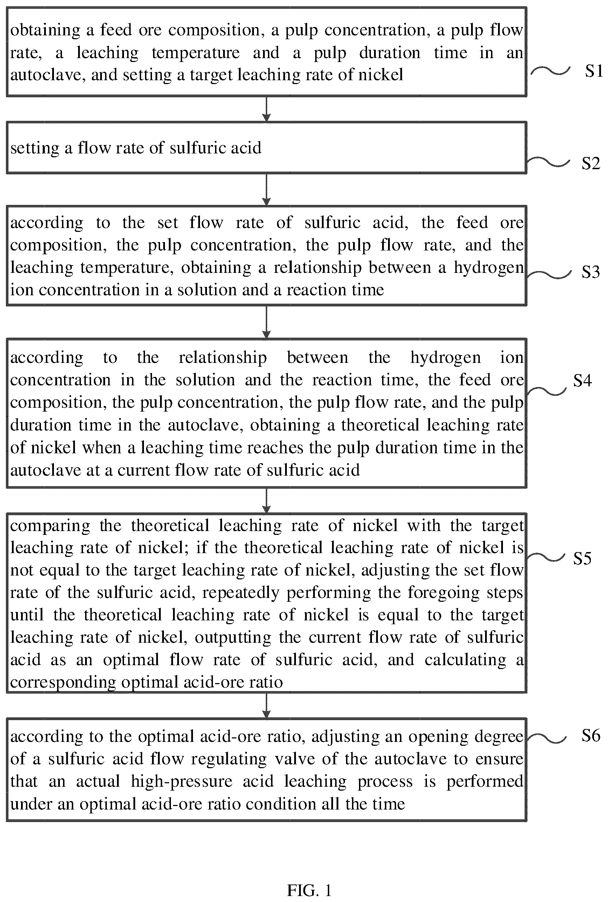

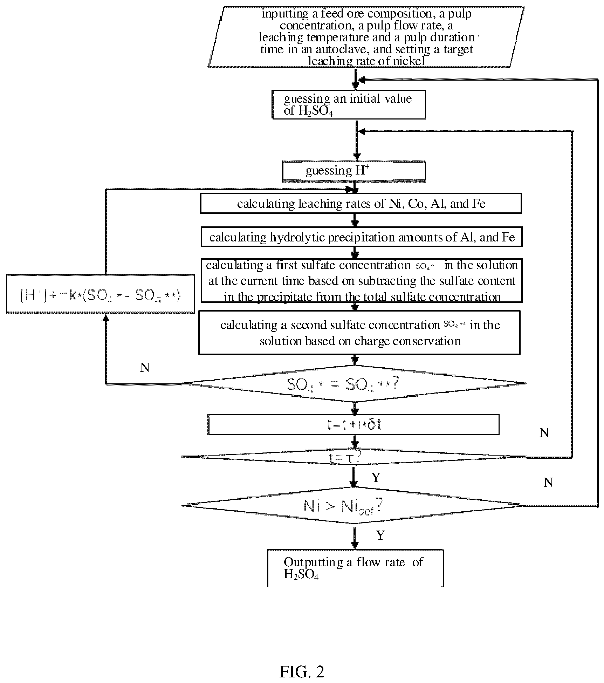

Referring to FIG. 1 and FIG. 2, the disclosure provides a dynamic optimization method for acid-to-ore ratio in high-pressure leaching of laterite nickel ore, including the following steps:
S1, obtaining a feed ore composition, a pulp concentration, a pulp flow rate, a leaching temperature and a pulp duration time in an autoclave, and setting a target leaching rate of nickel.
S2, setting a flow rate of sulfuric acid.
S3, according to the set flow rate of the sulfuric acid, the feed ore composition, the pulp concentration, the pulp flow rate, and the leaching temperature, obtaining a relationship between a hydrogen ion concentration in a solution and a reaction time (the solution mentioned in the disclosure refers to a solution in an autoclave). The hydrogen ion concentration in the solution has an important effect on leaching of nickel, cobalt, aluminum, and iron. However, the hydrogen ion concentration in the solution cannot be directly obtained by using the flow rate of sulfuric acid. In the disclosure, the hydrogen ion concentration in the solution is obtained by using the following method.

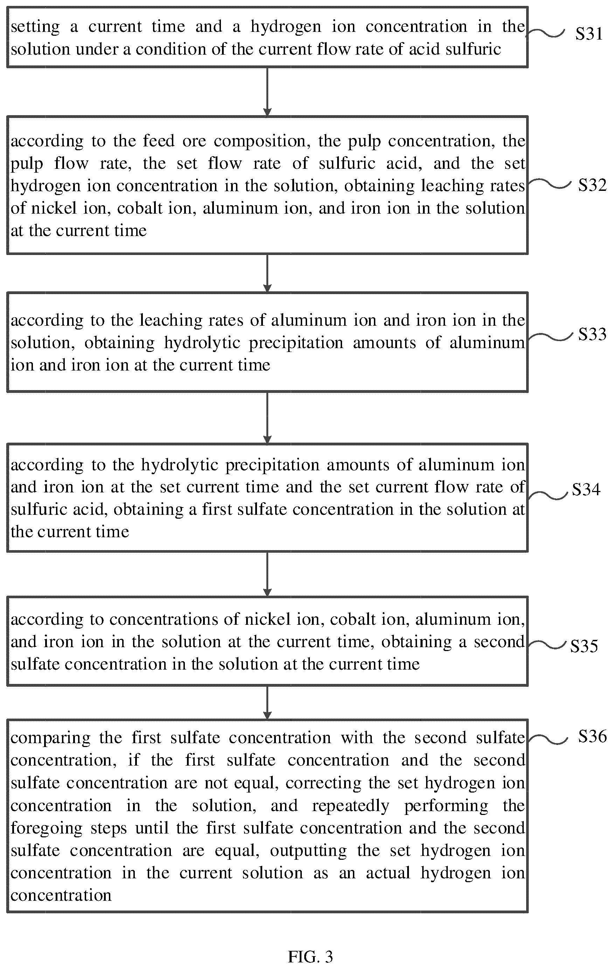

Referring to FIG. 2 and FIG. 3, a specific method for obtaining a hydrogen ion concentration in a solution includes the following steps:
S31, setting a current time and a hydrogen ion concentration in the solution under a condition of the current flow rate of acid sulfuric.
S32, according to the feed ore composition, the pulp concentration, the pulp flow rate, the set flow rate of sulfuric acid, and the set hydrogen ion concentration in the solution, obtaining leaching rates of nickel ion, cobalt ion, aluminum ion, and iron ion in the solution at the current time.

Wherein, the leaching rate of nickel ion in the solution at the current time is calculated according to a formula as follows: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right)$

Wherein, R represents a gas constant, T represents the leaching temperature, [*H*⁺] represents the set hydrogen ion concentration in the solution, t represents the current time, *X_{Ni}* represents the leaching rate of nickel ion in the solution at the current time, ${X}_{Ni}^{∞}$ represents a maximum leaching rate of nickel ion in the solution, and is calculated according to the feed ore composition, the pulp concentration, and the pulp flow rate.

The leaching rate of cobalt ion in the solution at the current time is calculated according to a formula as follows: $0.303 \times {e}^{- \frac{3179}{RT}} \left[{H}^{+}\right] t = {\left(1-{\left(1-\frac{{X}_{Co}}{{X}_{Co}^{∞}}\right)}^{\frac{1}{3}}\right)}^{2}$

Wherein, R represents a gas constant, T represents the leaching temperature, [*H*⁺] represents the set hydrogen ion concentration in the solution, t represents the current time, *X_{Co}* represents the leaching rate of cobalt ion in the solution at the current time, ${X}_{Co}^{∞}$ represents a maximum leaching rate of cobalt ion in the solution, and is calculated according to the feed ore composition, the pulp concentration, and the pulp flow rate.

The leaching rate of aluminum ion in the solution at the current time is calculated according to a formula as follows: $2.68 \times {10}^{9} \times {e}^{- \frac{101.9 \times {10}^{3}}{RT}} \left[{H}^{+}\right] t = 1 - 3 {\left(1-\frac{{X}_{Al}}{{X}_{Al}^{∞}}\right)}^{\frac{2}{3}} + 2 \left(1-\frac{{X}_{Al}}{{X}_{Al}^{∞}}\right)$

Wherein, R represents a gas constant, T represents the leaching temperature, [*H*⁺] represents the set hydrogen ion concentration in the solution, t represents the current time, *X_{Al}* represents the leaching rate of aluminum ion at the current time in the solution, ${X}_{Al}^{∞}$ represents a maximum leaching rate of aluminum ion in the solution, and is calculated according to the feed ore composition, the pulp concentration, and the pulp flow rate.

The leaching rate of iron ion in the solution at the current time is calculated according to a formula as follows: $4.91 \times {10}^{8} \times {e}^{- \frac{93.03 \times {10}^{3}}{RT}} \left[{H}^{+}\right] t = 1 - 3 {\left(1-\frac{{X}_{Fe}}{{X}_{Fe}^{∞}}\right)}^{\frac{2}{3}} + 2 \left(1-\frac{{X}_{Fe}}{{X}_{Fe}^{∞}}\right)$

Wherein, R represents a gas constant, T represents the leaching temperature, [*H*⁺] represents the set hydrogen ion concentration in the solution, t represents the current time, *X_{Fe}* represents the leaching rate of iron ion in the solution at the current time, ${X}_{Fe}^{∞}$ represents a maximum leaching rate of iron ion in the solution, and is calculated according to the feed ore composition, the pulp concentration, and the pulp flow rate.

S33, according to the hydrolytic precipitation amounts of aluminum ion and iron ion at the set current time and the set current flow rate of sulfuric acid, obtaining a first sulfate concentration in the solution at the current time.

The hydrolytic precipitation amount of aluminum ion at the current time is calculated according to formulas as follows: $\frac{{dM}_{Al}}{dt} = 0.408 \left[{H}^{+}\right] \left({S}_{Al}-1\right) {M}_{Al}$ ${S}_{Al} = \frac{{C}_{Al}^{in} \times {X}_{Al}}{\left[{Al}_{2}{\left({SO}_{4}\right)}_{3}\left(aq\right)\right]}$ $lg \left(\frac{{\left[{H}^{+}\right]}^{5 / 2} {\left[{HSO}_{4}^{-}\right]}^{5 / 2}}{\left[{Al}_{2}{\left({SO}_{4}\right)}_{3}\left(aq\right)\right]}\right) = - \frac{4464}{T} + 3.774 + \frac{14.21 \sqrt{{I}_{c , {Al}_{2} {\left({SO}_{4}\right)}_{3}}}}{1 + 1.6 \sqrt{{I}_{c , {Al}_{2} {\left({SO}_{4}\right)}_{3}}}} - 1.667 \sqrt{{I}_{c , {Al}_{2} {\left({SO}_{4}\right)}_{3}}}$ ${I}_{c , {Al}_{2} {\left({SO}_{4}\right)}_{3}} = 1 / 2 \left(4∗\left[{SO}_{4}^{2 -}\right]+9∗\left[{Al}^{3 +}\right]\right)$ $\left[{HSO}_{4}^{-}\right] = \left[{H}^{+}\right]$
wherein, T represents the leaching temperature, t represents the current time, *M_{Al}* represents the current hydrolytic precipitation amount of aluminum ion in the solution at the current time, [*H*⁺] represents the set hydrogen ion concentration in the solution, *S_{Al}* represents a saturation of aluminum ion in the solution, *X_{Al}* represents the leaching rate of aluminum ion in the solution, ${C}_{Al}^{in}$ represents an A1 concentration in the pulp, and is calculated according to the feed ore composition, the pulp concentration, and the pulp flow rate, [*Al*₂(*SO*₄)₃(*aq*)] represents a solubility of aluminum sulfate in the solution, $\left[{SO}_{4}^{2 -}\right]$ represents the first sulfate concentration in the solution at the current time, [A*l³⁺*] represents a concentration of aluminum ion in the solution, and is calculated according to the feed ore composition, the pulp concentration, and the pulp flow rate, $\left[{HSO}_{4}^{-}\right]$ represents a concentration of hydrogen sulfate ion in the solution, and *I*_{*c,Al*₂(*SO*₄)₃} represents an ion strength of *Al*₂(*SO*₄)₃.

The hydrolytic precipitation amount of iron ion at the current time is calculated according to formulas as follows: $\frac{{M}_{Fe}}{\left[{Fe}_{2}{\left({SO}_{4}\right)}_{3}\left(aq\right)\right] \times {S}_{Fe}} = 0.0114 {S}_{Fe}^{2} - 0.254 {S}_{Fe} + 1.2483$ ${S}_{Fe} = 6.725 - 5.735 \frac{{X}_{Ni}}{{X}_{Ni}^{∞}}$ $lg \left(\frac{\left[{H}^{+}\right] \left[{HSO}_{4}^{-}\right]}{\left[{Fe}_{2}{\left({SO}_{4}\right)}_{3}\left(aq\right)\right]}\right) = - \frac{2740}{T} + 10.72 - \frac{9.905 \sqrt{{I}_{c , {Fe}_{2} {\left({SO}_{4}\right)}_{3}}}}{1 + 1.6 \sqrt{{I}_{c , {Fe}_{2} {\left({SO}_{4}\right)}_{3}}}} + 0.0294 \sqrt{{I}_{c , {Fe}_{2} {\left({SO}_{4}\right)}_{3}}}$ ${I}_{c , {Fe}_{2} {\left({SO}_{4}\right)}_{3}} = 1 / 2 \left(4∗\left[{SO}_{4}^{2 -}\right]+9∗\left[{Fe}^{3 +}\right]\right)$ $\left[{HSO}_{4}^{-}\right] = \left[{H}^{+}\right]$
wherein, T represents the leaching temperature, *M_{Fe}* represents hydrolytic precipitation amount of iron ion at a current time, [*H*⁺] represents the set hydrogen ion concentration in the solution, *S_{Fe}* represents a saturation of iron ion in the solution, *X_{Ni}* represents the leaching rate of nickel ion in the solution, [*Fe*₂(*SO*₄)₃(*aq*)] represents a solubility of iron sulfate in the solution, ${X}_{Ni}^{∞}$ represents a maximum leaching rate of nickel ion in the solution, $\left[{SO}_{4}^{2 -}\right]$ represents the first sulfate concentration of in the current time solution, [*Fe*³⁺] represents a concentration of iron ion in the solution, is calculated according to the feed ore composition, the pulp concentration, and the pulp flow rate, $\left[{HSO}_{4}^{-}\right]$ represents a concentration of hydrogen sulfate ion in the solution, and *I*_{*c,Fe*₂(*SO*₄)₃} represents an ion strength of [*Fe*₂(*SO*₄)₃.

S34. according to the hydrolytic precipitation amounts of aluminum ion and iron ion at the set current time and the set current flow rate of sulfuric acid, obtaining a first sulfate concentration in the solution at the current time.

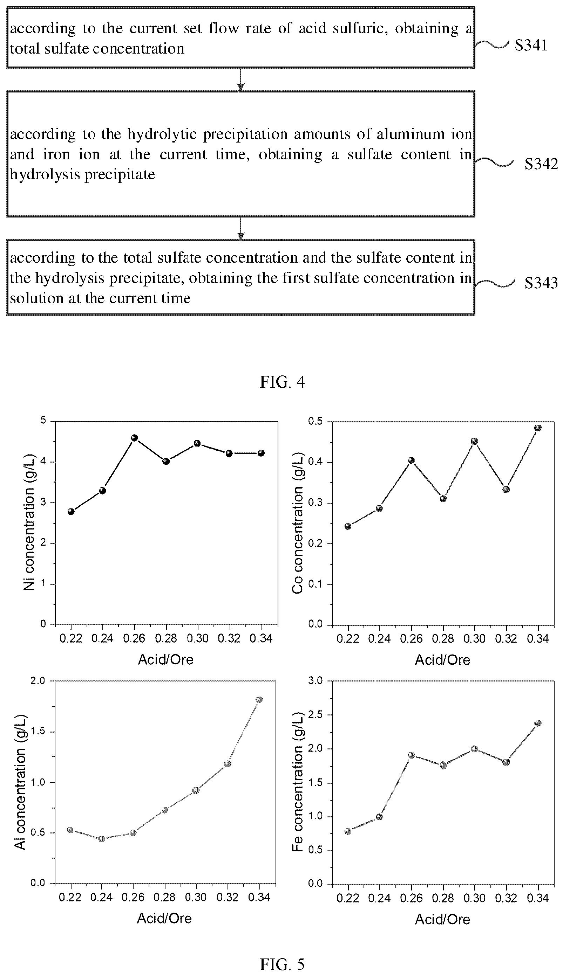

Referring to FIG. 4, step S34 specifically includes:
S341, according to the current set flow rate of acid sulfuric, obtaining a total sulfate concentration;
S342, according to the hydrolytic precipitation amounts of aluminum ion and iron ion at the current time, obtaining a sulfate content in hydrolysis precipitate;
S343, according to the total sulfate concentration and the sulfate content in the hydrolysis precipitate, obtaining the first sulfate concentration in solution at the current time. Specifically, the first sulfate concentration at the current time solution is a difference between the total sulfate concentration and the sulfate content in the hydrolysis precipitate.

A principle of a calculation process of step S341-S343 is as follows: the total sulfate concentration can be obtained according to an amount of sulfuric acid added into the solution. A part of the sulfuric acid added into the solution forms the sulfate ion, and the other part of the sulfuric acid radicals are hydrolyzed and precipitated by aluminum ion and iron ion as precipitate. Therefore, an actual sulfate concentration in the solution can be obtained by subtracting an amount of sulfuric acid in the precipitate of aluminum ion and iron ion from the total sulfate concentration.

S35. according to the concentrations of nickel ion, cobalt ion, aluminum ion, and iron ion in the solution at the current time, obtaining a second sulfate concentration in the solution at the current time.

A principle of step S35 is as follows: the anion and cation charges are conserved in the solution. The anion in the solution is mainly the sulfate ion. The cation in the solution is mainly the nickel ion, the cobalt ion, the aluminum ion, and the iron ion. A total positive charge concentration of the hydrogen ion, the nickel ion, the cobalt ion, the aluminum ion, and the iron ion is calculated to obtain the sulfate concentration in the solution. It should be noted that, under a high-pressure leaching reaction temperature condition, it is generally considered that H₂SO₄ is only ionized to H+ and HSO₄⁻, and does not directly ionize out of SO₄²⁻. H⁺ and HSO₄⁻ are canceled with each other as the positive and negative charges. Therefore, when calculating the cation in a solution, H⁺ ion is not considered.

S36. comparing the first sulfate concentration with the second sulfate concentration, if the first sulfate concentration and the second sulfate concentration are not equal, correcting the set hydrogen ion concentration in the solution, and repeatedly performing the foregoing steps until the first sulfate concentration and the second sulfate concentration are equal, outputting the set hydrogen ion concentration in the current solution as an actual hydrogen ion concentration.

The set hydrogen ion concentration in the solution is corrected according to a formula as follows: $\left[{H}^{+}\right] \left(after correction\right) = \left(before correction\right) \left.+k\right) \left[{H}^{+}\right] \times \left({SO}_{4}*-{SO}_{4}**\right.$
wherein, [*H⁺*](*after correction*) represents a corrected set hydrogen ion concentration, [*H⁺*](*before correction*) represents a current set hydrogen ion concentration, *SO*₄* represents the first sulfate concentration, *SO*₄** represents the second sulfate concentration, and k represents a proportion coefficient.

A principle of step S36 is as follows: the first sulfate concentration obtained by subtracting the sulfate content in the hydrolysis precipitate of the aluminum ion and the iron ion from the total sulfate concentration is equal to the second sulfate concentration obtained by charge conservation. If the first sulfate concentration is not equal to the second sulfate concentration, it indicates that at the current set time and under the condition of the current flow rate of sulfuric acid, the hydrogen ion concentration in the solution is inaccurate in step S31. Therefore, the hydrogen ion concentration needs to be reset until both are equal, which indicates that the current set hydrogen ion concentration is an accurate value. Therefore, a real-time hydrogen ion concentration may be obtained by using the foregoing method, which provides a basis for subsequently calculating the theoretical leaching rate of nickel.

S4, according to the relationship between the hydrogen ion concentration in the solution and the reaction time, the feed ore composition, the pulp concentration, the pulp flow rate, and the pulp duration time in the autoclave, obtaining a theoretical leaching rate of nickel when a leaching time reaches the pulp duration time in the autoclave at a current flow rate of sulfuric acid, the specific calculation formula is: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right)$

Wherein, R represents a gas constant, T represents the leaching temperature, [*H*⁺] represents the hydrogen ion concentration in the solution at a time t, t represents the current time, *X_{Ni}* represents the leaching rate of nickel ion in the solution at the current time, ${X}_{Ni}^{∞}$ represents a maximum leaching rate of nickel ion in the solution, and is calculated according to the feed ore composition, the pulp concentration, and the pulp flow rate.

S5, comparing the theoretical leaching rate of nickel with the target leaching rate of nickel; if the theoretical leaching rate of nickel is not equal to the target leaching rate of nickel, adjusting the set flow rate of the sulfuric acid, repeatedly performing the foregoing steps until the theoretical leaching rate of nickel is equal to the target leaching rate of nickel, outputting the current flow rate of sulfuric acid as an optimal flow rate of sulfuric acid, and calculating a corresponding optimal acid-to-ore ratio.

Specifically, if the theoretical leaching rate of nickel is greater than the target leaching rate of nickel, reducing the flow rate of sulfuric acid; and
if the theoretical leaching rate of nickel is less than the target leaching rate of nickel, increasing the flow rate of sulfuric acid.

S6. according to the optimal acid-to-ore ratio, adjusting an opening degree of a sulfuric acid flow regulating valve of the autoclave to ensure an actual high-pressure acid leaching process is performed under an optimal acid-to-ore ratio condition all the time. This control process can be controlled directly through the program, without manual operation.

In conclusion, a beneficial effect of the technical solution provided in the disclosure includes: providing a high-pressure acid leaching mathematical model and an optimal acid-to-ore ratio calculation method, calculating the optimal acid-to-ore ratio by inputting a real-time feed ore component into the high-pressure acid leaching mathematical model, a sulfuric acid addition flow of a high-pressure leaching link of the clay nickel ore can be dynamically adjusted according to the feed mineral component, so that a high-pressure acid leaching process is always in a dynamic optimal state with the optimal acid-to-ore ratio. Compared with the conventional method for optimizing the acid-to-ore ratio through a pilot experiment, the method has advantages of fast response and accurate optimization.

The following is the program code of the acid leaching process of the autoclave involved in the technical solution:

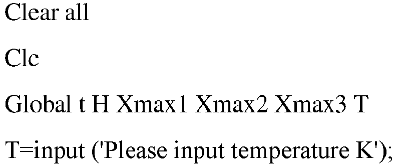

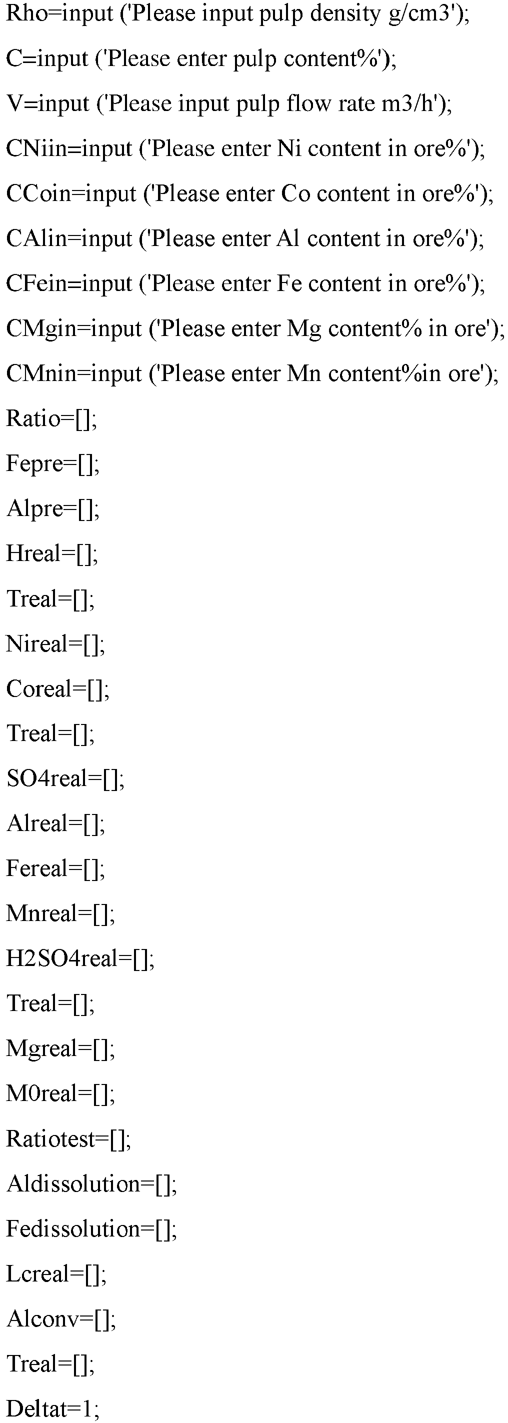

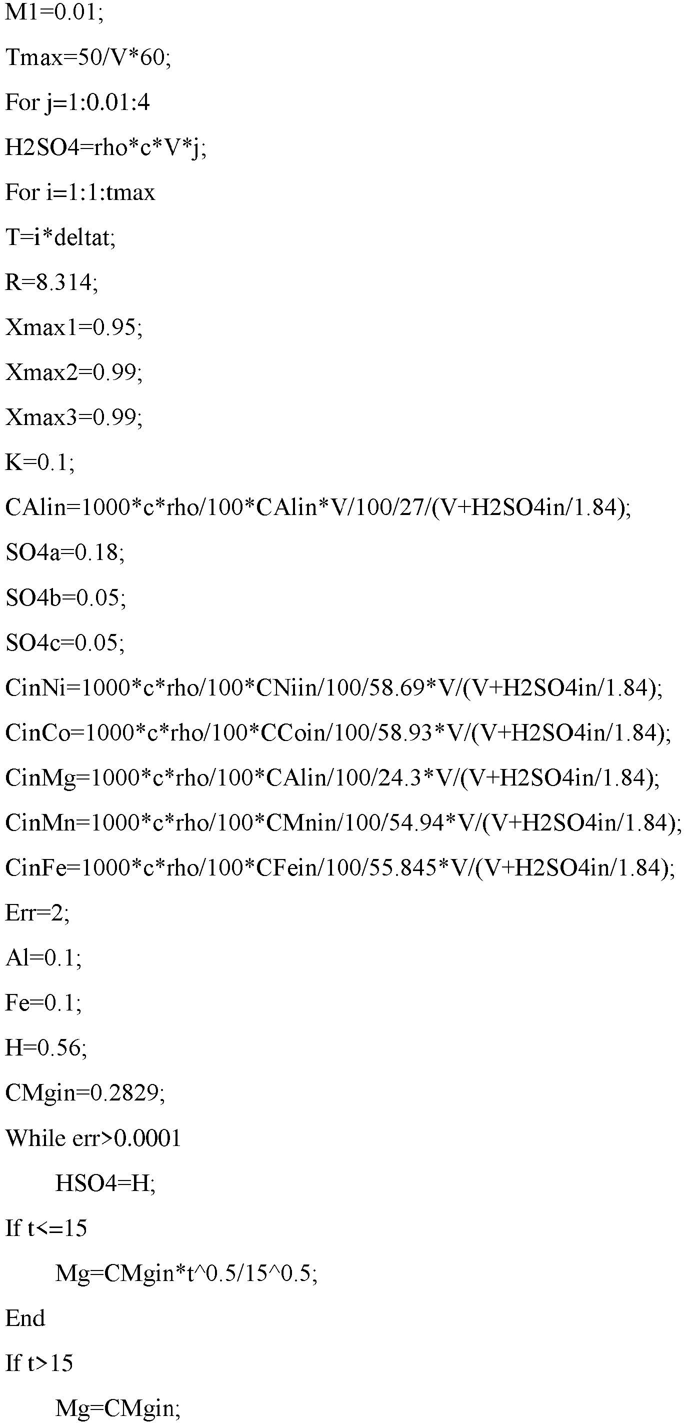

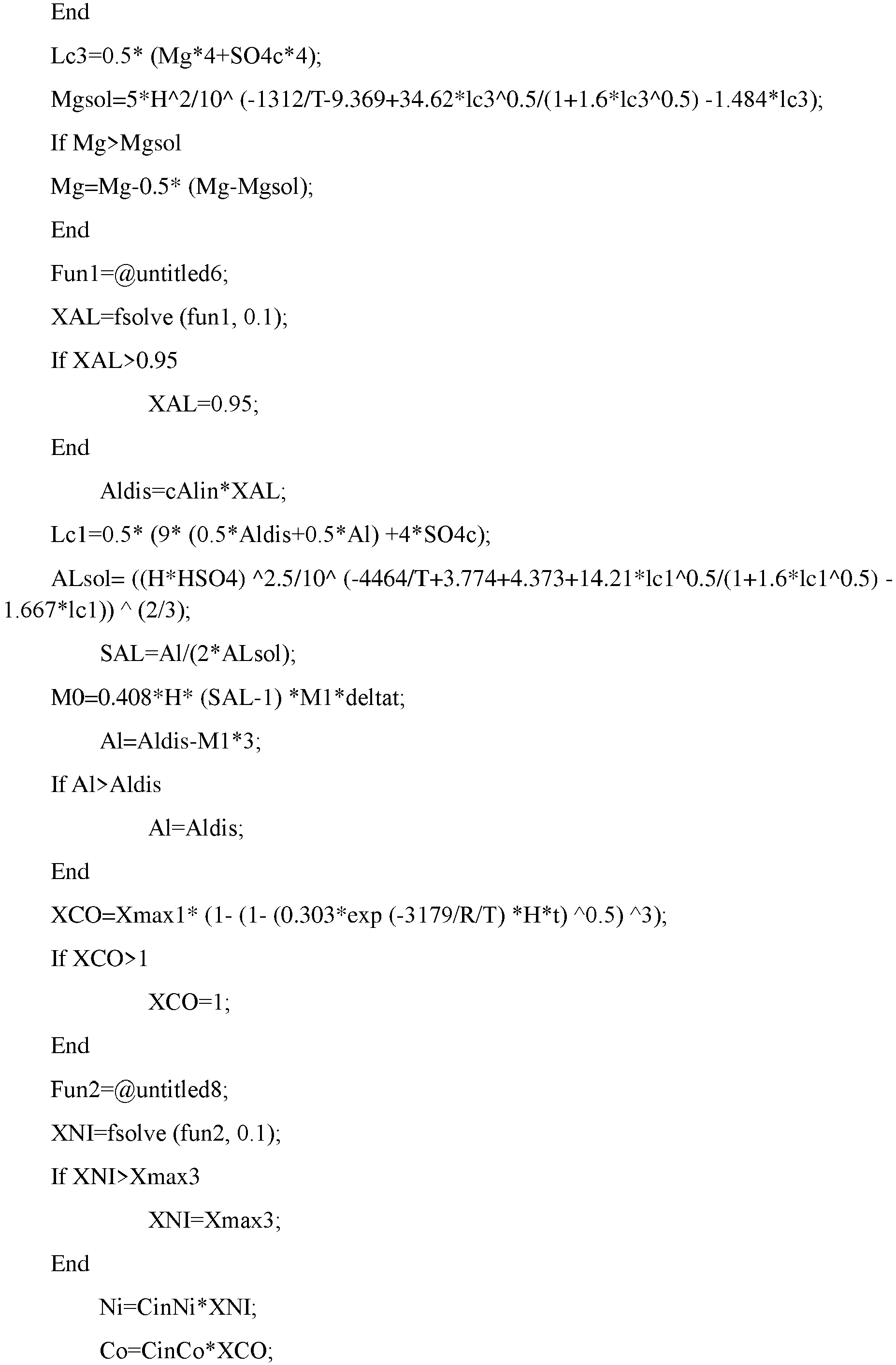

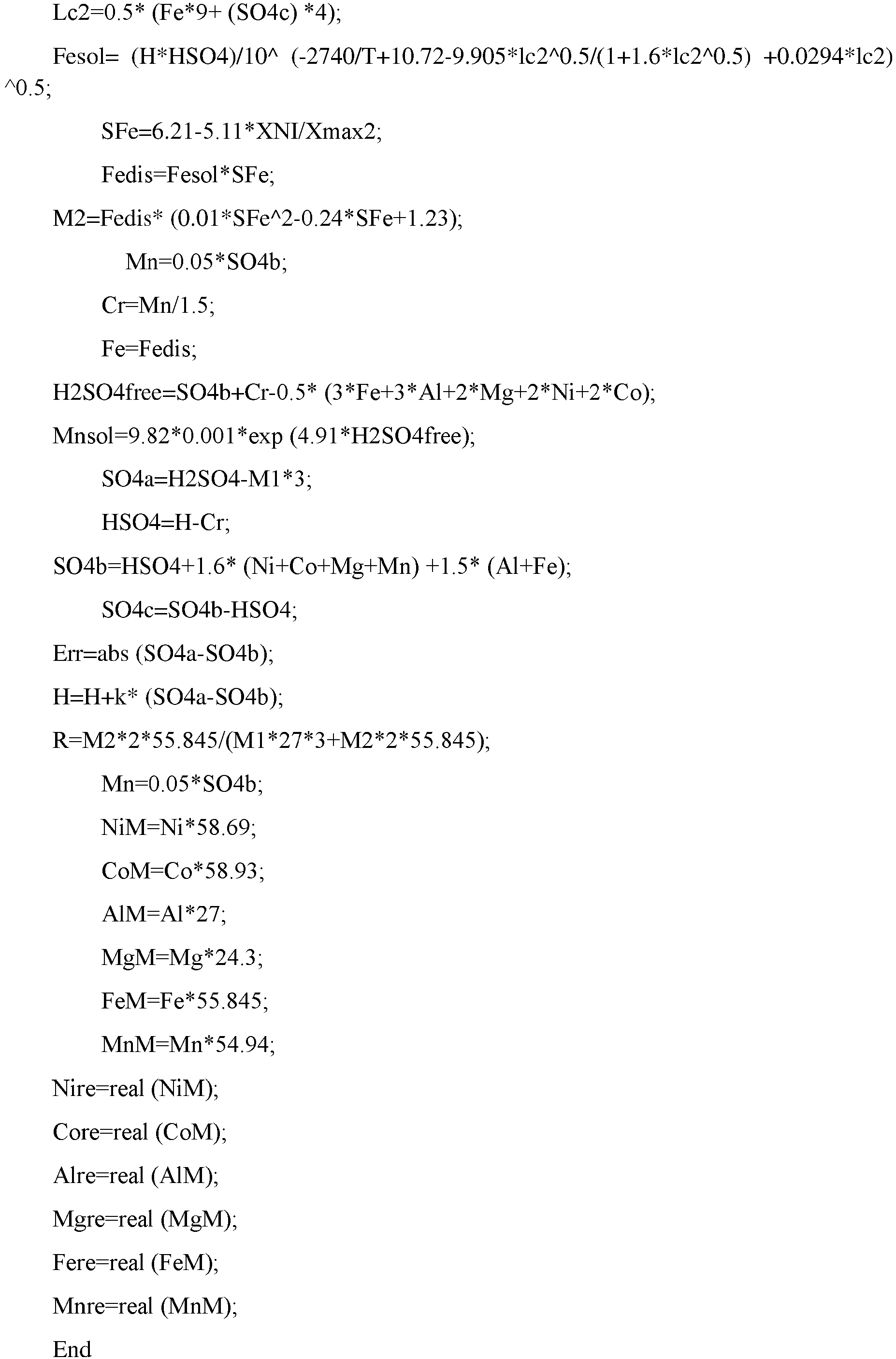

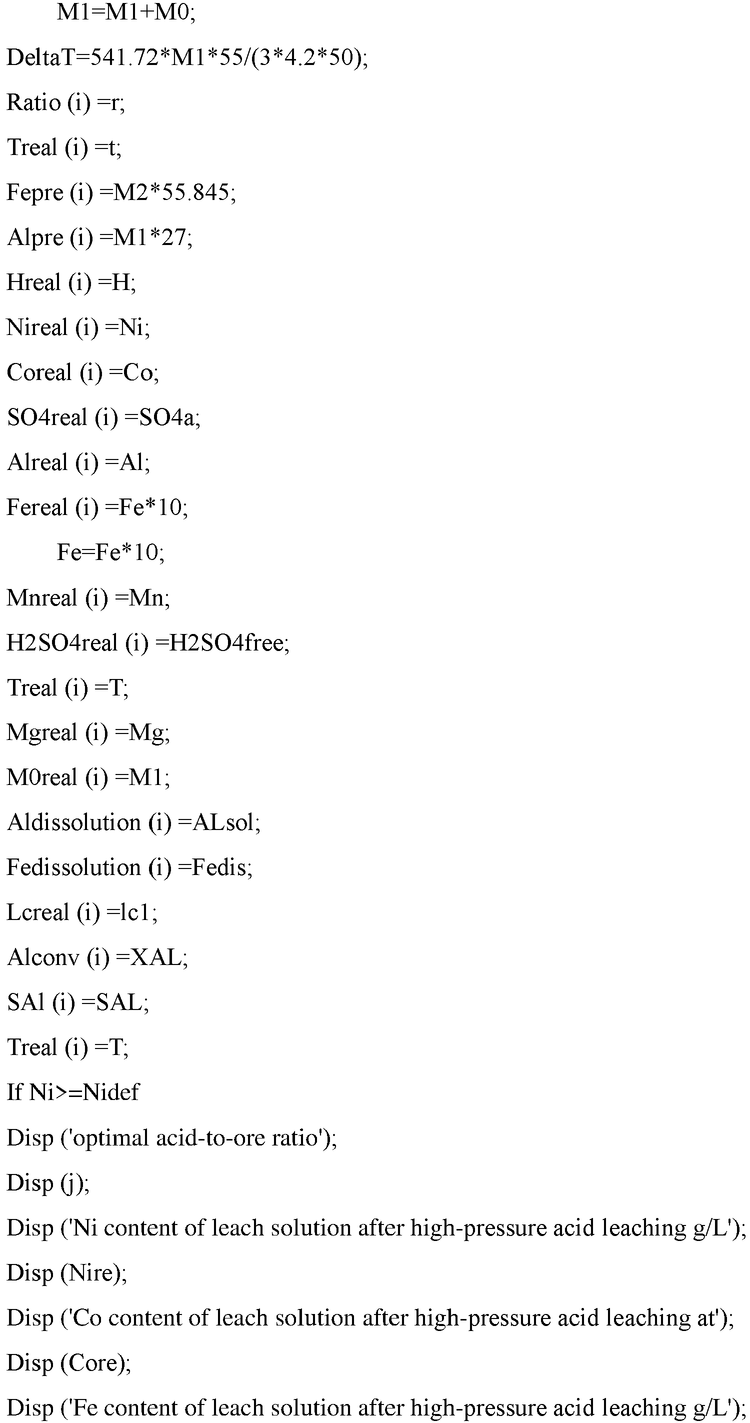

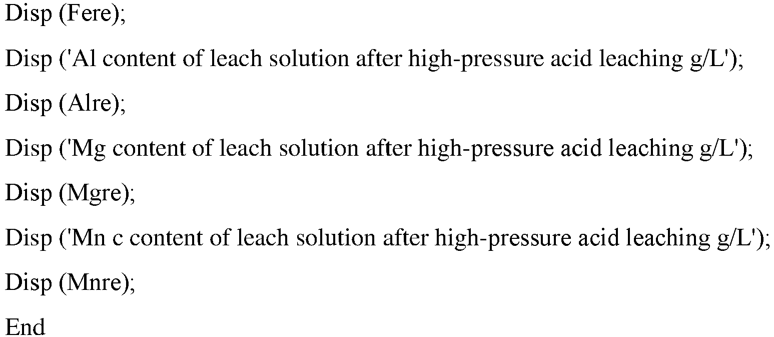

### Technical solution verification experiment

To verify a reliability of the above-mentioned calculation model, a laboratory small test apparatus is used to perform an acid-to-ore ratio optimization verification experiment, and reaction process parameters of the small test apparatus is input into the above-mentioned calculation program to obtain the optimal acid-to-ore ratio as 0.27.

Then, the small test apparatus is used to perform parallel experiments under multiple acid-to-ore ratios. An experimental result is shown in FIG. 5.

As shown in FIG. 5, when the acid-to-ore ratio is 0.26, Ni has a highest leaching rate at the acid-to-ore ratio, leaching rates of A1 and Fe are relatively low, thereby reducing subsequent separation costs.

**Table 1 Operation conditions, leaching effects, and leaching cost of the acid high-pressure leaching process before and after optimization**

| | acid-to-ore ratio | Ni leaching rate (%) | Co leaching rate (%) | A1 leaching rate (%) | Operation cost ($/h) |
|---|---|---|---|---|---|
| Before optimization | 0.33 | 98% | 100% | 38% | 2822 |
| After optimization | 0.27 | 98% | 100% | 16% | 2736 |

Table 1 shows operating conditions, leaching effects, and leaching costs of a high-pressure acid leaching process before and after optimization. As shown in Table 1, an optimal acid-to-ore ratio obtained by performing dynamic optimization by using the calculation model is basically consistent with an experimental result obtained by performing acid-to-ore ratio optimization by a laboratory small-scale test apparatus, which ensures the leaching rate of a target metal such as Ni, Co, and Mn while limiting the leaching rate of a non-target element such as Al. A production cost of 86 $/h can be saved by optimizing the acid-to-ore ratio, and an annual cost of the apparatus is about 751,300$, and a waste of sulfuric acid is not required, thereby promoting efficient and energy saving of the high-pressure acid leaching process of laterite nickel ore.

The foregoing description are merely preferred specific implementation of the disclosure, but are not intended to limit the protection scope of the disclosure.

## Claims

1. A dynamic optimization method for acid-to-ore ratio in high-pressure leaching of laterite nickel ore, comprising:
obtaining a feed ore composition, a pulp concentration, a pulp flow rate, a leaching temperature and a pulp duration time in an autoclave, and setting a target leaching rate of nickel;
setting a flow rate of sulfuric acid;
according to the set flow rate of sulfuric acid, the feed ore composition, the pulp concentration, the pulp flow rate, and the leaching temperature, obtaining a relationship between a hydrogen ion concentration in a solution and a reaction time;
according to the relationship between the hydrogen ion concentration in the solution and the reaction time, the feed ore composition, the pulp concentration, the pulp flow rate, and the pulp duration time in the autoclave, obtaining a theoretical leaching rate of nickel when a leaching time reaches the pulp duration time in the autoclave at a current flow rate of sulfuric acid;
comparing the theoretical leaching rate of nickel with the target leaching rate of nickel; if the theoretical leaching rate of nickel is not equal to the target leaching rate of nickel, adjusting the set flow rate of the sulfuric acid, repeatedly performing the foregoing steps until the theoretical leaching rate of nickel is equal to the target leaching rate of nickel, outputting the current flow rate of sulfuric acid as an optimal flow rate of sulfuric acid, and calculating a corresponding optimal acid-to-ore ratio; and
according to the optimal acid-to-ore ratio, adjusting an opening degree of a sulfuric acid flow regulating valve of the autoclave to ensure that an actual high-pressure acid leaching process is performed under an optimal acid-to-ore ratio condition all the time;
wherein according to the set flow rate of the sulfuric acid, the feed mineral composition, the pulp concentration, the pulp flow rate, and the leaching temperature, obtaining a relationship between a hydrogen ion concentration in a solution and a reaction time, comprises:
setting a current time and a hydrogen ion concentration in the solution under a condition of the current flow rate of acid sulfuric;
according to the feed ore composition, the pulp concentration, the pulp flow rate, the set flow rate of sulfuric acid, and the set hydrogen ion concentration in the solution, obtaining leaching rates of nickel ion, cobalt ion, aluminum ion, and iron ion in the solution at the current time;
according to the leaching rates of aluminum ion and iron ion in the solution, obtaining hydrolytic precipitation amounts of aluminum ion and iron ion at the current time;
according to the hydrolytic precipitation amounts of aluminum ion and iron ion at the set current time and the set current flow rate of sulfuric acid, obtaining a first sulfate concentration in the solution at the current time;
according to concentrations of nickel ion, cobalt ion, aluminum ion, and iron ion in the solution at the current time, obtaining a second sulfate concentration in the solution at the current time; and
comparing the first sulfate concentration with the second sulfate concentration, if the first sulfate concentration and the second sulfate concentration are not equal, correcting the set hydrogen ion concentration in the solution, and repeatedly performing the foregoing steps until the first sulfate concentration and the second sulfate concentration are equal, outputting the set hydrogen ion concentration in the current solution as an actual hydrogen ion concentration;
wherein according to the feed ore composition, the pulp concentration, the pulp flow rate, the set flow rate of sulfuric acid, and the set hydrogen ion concentration in the solution, obtaining leaching rates of nickel ion, cobalt ion, aluminum ion, and iron ion in the solution at the current time, the leaching rate of nickel ion in the solution at the current time is obtained according to a formula as follows: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
wherein, R represents a gas constant, T represents the leaching temperature, [*H*⁺] represents the set hydrogen ion concentration in the solution, t represents the current time, *X_{Ni}* represents the leaching rate of nickel ion in the solution at the current time, ${X}_{Ni}^{∞}$ represents a maximum leaching rate of nickel ion in the solution, and is calculated according to the feed ore composition, the pulp concentration, and the pulp flow rate;
wherein the leaching rate of cobalt ion in the solution at the current time is obtained according to a formula as follows: $0.303 \times {e}^{- \frac{3179}{RT}} \left[{H}^{+}\right] t = {\left(1-{\left(1-\frac{{X}_{Co}}{{X}_{Co}^{∞}}\right)}^{\frac{1}{3}}\right)}^{2} ,$
wherein, R represents a gas constant, T represents the leaching temperature, [*H*⁺] represents the set hydrogen ion concentration in the solution, t represents the current time, *X_{Co}* represents the leaching rate of cobalt ion in the solution at the current time, ${X}_{Co}^{∞}$ represents a maximum leaching rate of cobalt ion in the solution, and is calculated according to the feed ore composition, the pulp concentration, and the pulp flow rate;
wherein the leaching rate of aluminum ion in the solution at the current time is obtained according to a formula as follows: $2.68 \times {10}^{9} \times {e}^{- \frac{101.9 \times {10}^{3}}{RT}} \left[{H}^{+}\right] t = 1 - 3 {\left(1-\frac{{X}_{Al}}{{X}_{Al}^{∞}}\right)}^{\frac{2}{3}} + 2 \left(1-\frac{{X}_{Al}}{{X}_{Al}^{∞}}\right) ,$
wherein R represents a gas constant, T represents the leaching temperature, [*H*⁺] represents the set hydrogen ion concentration in the solution, t represents the current time, *X_{Al}* represents the leaching rate of aluminum ion at the current time in the solution, ${X}_{Al}^{∞}$ represents a maximum leaching rate of aluminum ion in the solution, and is calculated according to the feed ore composition, the pulp concentration, and the pulp flow rate;
wherein the leaching rate of iron ion in the solution at the current time is obtained according to a formula as follows: $4.91 \times {10}^{8} \times {e}^{- \frac{93.03 \times {10}^{3}}{RT}} \left[{H}^{+}\right] t = 1 - 3 {\left(1-\frac{{X}_{Fe}}{{X}_{Fe}^{∞}}\right)}^{\frac{2}{3}} + 2 \left(1-\frac{{X}_{Fe}}{{X}_{Fe}^{∞}}\right) ,$
wherein, R represents a gas constant, T represents the leaching temperature, [*H*⁺] represents the set hydrogen ion concentration in the solution, t represents the current time, *X_{Fe}* represents the leaching rate of iron ion in the solution at the current time, ${X}_{Fe}^{∞}$ represents a maximum leaching rate of iron ion in the solution, and is calculated according to the feed ore composition, the pulp concentration, and the pulp flow rate;
wherein according to the leaching rates of aluminum ion and iron ion in the solution, obtaining hydrolytic precipitation amounts of aluminum ion and iron ion at the current time, the hydrolytic precipitation amount of aluminum ion at the current time is obtained according to formulas as follows: $\frac{{dM}_{Al}}{dt} = 0.408 \left[{H}^{+}\right] \left({S}_{Al}-1\right) {M}_{Al}$ ${S}_{Al} = \frac{{C}_{Al}^{in} \times {X}_{Al}}{\left[{Al}_{2}{\left({SO}_{4}\right)}_{3}\left(aq\right)\right]}$ $lg \left(\frac{{\left[{H}^{+}\right]}^{5 / 2} {\left[{HSO}_{4}^{-}\right]}^{5 / 2}}{\left[{Al}_{2}{\left({SO}_{4}\right)}_{3}\left(aq\right)\right]}\right) = - \frac{4464}{T} + 3.774 + \frac{14.21 \sqrt{{I}_{c , {Al}_{2} {\left({SO}_{4}\right)}_{3}}}}{1 + 1.6 \sqrt{{I}_{c , {Al}_{2} {\left({SO}_{4}\right)}_{3}}}} - 1.667 \sqrt{{I}_{c , {Al}_{2} {\left({SO}_{4}\right)}_{3}}}$ ${I}_{c , {Al}_{2} {\left({SO}_{4}\right)}_{3}} = 1 / 2 \left(4∗\left[{SO}_{4}^{2 -}\right]+9∗\left[{Al}^{3 +}\right]\right)$ $\left[{HSO}_{4}^{-}\right] = \left[{H}^{+}\right] ,$
wherein, T represents the leaching temperature, t represents the current time, *M_{Al}* represents the current hydrolytic precipitation amount of aluminum ion in the solution at the current time, [*H*⁺] represents the set hydrogen ion concentration in the solution, *S_{Al}* represents a saturation of aluminum ion in the solution, *X_{Al}* represents the leaching rate of aluminum ion in the solution, ${C}_{Al}^{in}$ represents an A1 concentration in the pulp, and is calculated according to the feed ore composition, the pulp concentration, and the pulp flow rate, [*Al*₂(*SO₄*)₃(*aq*)] represents a solubility of aluminum sulfate in the solution, $\left[{SO}_{4}^{2 -}\right]$ represents the first sulfate concentration in the solution at the current time, [A*l³⁺*] represents the concentration of aluminum ion in the solution, and is calculated according to the feed ore composition, the pulp concentration, and the pulp flow rate, $\left[{HSO}_{4}^{-}\right]$ represents a concentration of hydrogen sulfate ion in the solution, and *I*_{*c,Al*₂(*SO*₄)3} represents an ion strength of *Al₂*(*SO*₄)₃;
wherein the hydrolytic precipitation amount of iron ion at the current time is obtained according to formulas as follows: $\frac{{M}_{Fe}}{\left[{Fe}_{2}{\left({SO}_{4}\right)}_{3}\left(aq\right)\right] \times {S}_{Fe}} = 0.0114 {S}_{Fe}^{2} - 0.254 {S}_{Fe} + 1.2483$ ${S}_{Fe} = 6.725 - 5.735 \frac{{X}_{Ni}}{{X}_{Ni}^{∞}}$ $lg \left(\frac{\left[{H}^{+}\right] \left[{HSO}_{4}^{-}\right]}{\left[{Fe}_{2}{\left({SO}_{4}\right)}_{3}\left(aq\right)\right]}\right) = - \frac{2740}{T} + 10.72 - \frac{9.905 \sqrt{{I}_{c , {Fe}_{2} {\left({SO}_{4}\right)}_{3}}}}{1 + 1.6 \sqrt{{I}_{c , {Fe}_{2} {\left({SO}_{4}\right)}_{3}}}} + 0.0294 \sqrt{{I}_{c , {Fe}_{2} {\left({SO}_{4}\right)}_{3}}}$ ${I}_{c , {Fe}_{2} {\left({SO}_{4}\right)}_{3}} = 1 / 2 \left(4∗\left[{SO}_{4}^{2 -}\right]+9∗\left[{Fe}^{3 +}\right]\right)$ $\left[{HSO}_{4}^{-}\right] = \left[{H}^{+}\right] ,$
wherein, T represents the leaching temperature, *M_{Fe}* represents hydrolytic precipitation amount of iron ion at the current time, [*H*⁺] represents the set hydrogen ion concentration in the solution, *S_{Fe}* represents a saturation of iron ion in the solution, *X_{Ni}* represents the leaching rate of nickel ion in the solution, [*Fe*₂(*SO*₄)₃(*aq*)] represents a solubility of iron sulfate in the solution, ${X}_{Ni}^{∞}$ represents a maximum leaching rate of nickel ion in the solution, $\left[{SO}_{4}^{2 -}\right]$ represents the first sulfate concentration of in the current time solution, [*Fe*³⁺] represents the concentration of iron ion in the solution, and is calculated according to the feed ore composition, the pulp concentration, and the pulp flow rate, $\left[{HSO}_{4}^{-}\right]$ represents a concentration of hydrogen sulfate ion in the solution, and *I*_{*c,Fe*₂(*SO*₄)₃} represents an ion strength of [*Fe*₂(*SO*₄)₃;
wherein according to the hydrolytic precipitation amounts of aluminum ion and iron ion at the set current time and the set current flow rate of sulfuric acid, obtaining a first sulfate concentration in the solution at the current time, comprises:
according to the current set flow rate of acid sulfuric, obtaining a total sulfate concentration;
according to the hydrolytic precipitation amounts of aluminum ion and iron ion at the current time, obtaining a sulfate content in hydrolysis precipitate;
according to the total sulfate concentration and the sulfate content in the hydrolysis precipitate, obtaining the first sulfate concentration in solution at the current time;
wherein comparing the first sulfate concentration with the second sulfate concentration, if the first sulfate concentration and the second sulfate concentration are not equal, correcting the set hydrogen ion concentration in the solution, and repeatedly performing the foregoing steps until the first sulfate concentration and the second sulfate concentration are equal, outputting the set hydrogen ion concentration in the current solution as an actual hydrogen ion concentration, the set hydrogen ion concentration in the solution is corrected according to a formula as follows: $\left[{H}^{+}\right] \left(after correction\right) = \left(before correction\right) \left.+k\right) \left[{H}^{+}\right] \times \left({SO}_{4}*-{SO}_{4}**\right) ,$
wherein, [*H⁺*](*after correction*) represents a corrected set hydrogen ion concentration, [*H⁺*](*before correction*) represents the current set hydrogen ion concentration, *SO*₄* represents the first sulfate concentration, *SO*₄** represents the second sulfate concentration, and k represents a proportion coefficient;
wherein according to the feed ore composition, the pulp concentration, the pulp flow rate, the set flow rate of sulfuric acid, and the set hydrogen ion concentration in the solution, obtaining leaching rates of nickel ion, cobalt ion, aluminum ion, and iron ion in the solution at the current time, the theoretical leaching rate of nickel when a leaching time reaches the pulp duration time in the autoclave at a current flow rate of sulfuric acid is obtained according to a formula as follows: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
wherein, R represents a gas constant, T represents the leaching temperature, [*H*⁺] represents the hydrogen ion concentration in the solution at a time t, t represents the current time, *X_{Ni}* represents the leaching rate of nickel ion in the solution at the current time, ${X}_{Ni}^{∞}$ represents a maximum leaching rate of nickel ion in the solution, and is calculated according to the feed ore composition, the pulp concentration, and the pulp flow rate.

2. The dynamic optimization method for acid-to-ore ratio in high-pressure leaching of laterite nickel ore according to claim 1, wherein comparing the theoretical leaching rate of nickel with the target leaching rate of nickel; if the theoretical leaching rate of nickel is not equal to the target leaching rate of nickel, adjusting the set flow rate of the sulfuric acid, repeatedly performing the foregoing steps until the theoretical leaching rate of nickel is equal to the target leaching rate of nickel, comprises:
if the theoretical leaching rate of nickel is greater than the target leaching rate of nickel, reducing the flow rate of sulfuric acid; and
if the theoretical leaching rate of nickel is less than the target leaching rate of nickel, increasing the flow rate of sulfuric acid.

## Patentansprüche

1. Dynamisches Optimierungsverfahren für das Säure-Erz-Verhältnis bei der Hochdruckauslaugung von Laterit-Nickelerz, umfassend:
Erhalten einer Zufuhrerzzusammensetzung, einer Trübekonzentration, einer Trübedurchflussrate, einer Auslaugtemperatur und einer Trübedauer in einem Autoklaven und Festlegen einer Zielauslaugrate von Nickel;
Festlegen einer Durchflussrate von Schwefelsäure;
entsprechend der festgelegten Durchflussrate von Schwefelsäure, der Zufuhrerzzusammensetzung, der Trübekonzentration, der Trübedurchflussrate und der Auslaugtemperatur, Erhalten eines Verhältnisses zwischen einer Wasserstoffionenkonzentration in einer Lösung und einer Reaktionszeit;
entsprechend dem Verhältnis zwischen der Wasserstoffionenkonzentration in der Lösung und der Reaktionszeit, der Zufuhrerzzusammensetzung, der Trübekonzentration, der Trübedurchflussrate und der Trübedauerzeit im Autoklaven, Erhalten einer theoretischen Auslaugrate von Nickel, wenn eine Auslaugzeit die Trübedauerzeit im Autoklaven bei einer aktuellen Durchflussrate von Schwefelsäure erreicht;
Vergleichen der theoretischen Auslaugrate von Nickel mit der Zielauslaugrate von Nickel; wenn die theoretische Auslaugrate von Nickel nicht der Zielauslaugrate von Nickel entspricht, Anpassen der festgelegten Durchflussrate der Schwefelsäure, wiederholtes Durchführen der vorstehenden Schritte, bis die theoretische Auslaugrate von Nickel der Zielauslaugrate von Nickel entspricht, Ausgeben der aktuellen Durchflussrate von Schwefelsäure als optimale Durchflussrate von Schwefelsäure und Berechnen eines entsprechenden optimalen Säure-Erz-Verhältnisses; und
Anpassen eines Öffnungsgrads eines Schwefelsäure-Durchflussregelventils des Autoklaven gemäß dem optimalen Säure-Erz-Verhältnis, um sicherzustellen, dass ein tatsächlicher Hochdruck-Säureauslaugungsprozess jederzeit unter optimalen Säure-Erz-Verhältnis-Bedingungen durchgeführt wird;
wobei das Erhalten eines Verhältnisses zwischen einer Wasserstoffionenkonzentration in einer Lösung und einer Reaktionszeit entsprechend der festgelegten Durchflussrate der Schwefelsäure, der Zufuhrmineralzusammensetzung, der Trübekonzentration, der Trübedurchflussrate und der Auslaugtemperatur Folgendes umfasst:
Festlegen einer aktuellen Zeit und einer Wasserstoffionenkonzentration in der Lösung unter einer Bedingung der aktuellen Durchflussrate von Schwefelsäure;
entsprechend der Zufuhrerzzusammensetzung, der Trübekonzentration, der Trübedurchsatzrate, der festgelegten Durchflussrate von Schwefelsäure und der festgelegten Wasserstoffionenkonzentration in der Lösung, Erhalten von Auslaugraten von Nickelion, Kobaltion, Aluminiumionen und Eisenionen in der Lösung zum aktuellen Zeitpunkt;
entsprechend den Auslaugraten von Aluminiumion und Eisenion in der Lösung, Erhalten von hydrolytischen Ausfällungsmengen von Aluminiumionen und Eisenionen zum aktuellen Zeitpunkt;
entsprechend den hydrolytischen Ausfällungsmengen von Aluminiumionen und Eisenionen zum festgelegten aktuellen Zeitpunkt und der festgelegten aktuellen Durchflussrate von Schwefelsäure, Erhalten einer ersten Sulfatkonzentration in der Lösung zum aktuellen Zeitpunkt;
entsprechend den Konzentrationen von Nickelion, Kobaltion, Aluminiumionen und Eisenionen in der Lösung zum aktuellen Zeitpunkt, Erhalten einer zweiten Sulfatkonzentration in der Lösung zum aktuellen Zeitpunkt; und
Vergleichen der ersten Sulfatkonzentration mit der zweiten Sulfatkonzentration, wenn die erste Sulfatkonzentration und die zweite Sulfatkonzentration nicht gleich sind, Korrigieren der festgelegten Wasserstoffionenkonzentration in der Lösung und wiederholtes Durchführen der vorstehenden Schritte, bis die erste Sulfatkonzentration und die zweite Sulfatkonzentration gleich sind, Ausgeben der festgelegten Wasserstoffionenkonzentration in der aktuellen Lösung als tatsächliche Wasserstoffionenkonzentration;
wobei entsprechend der Zufuhrerzzusammensetzung, der Trübekonzentration, der Trübedurchflussrate, der festgelegten Durchflussrate von Schwefelsäure und der festgelegten Wasserstoffionenkonzentration in der Lösung Auslaugraten von Nickelionen, Kobaltionen, Aluminiumionen und Eisenionen in der Lösung zum aktuellen Zeitpunkt erhalten werden, wobei die Auslaugrate von Nickelionen in der Lösung zum aktuellen Zeitpunkt gemäß folgender Formel erhalten wird: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
wobei R eine Gaskonstante darstellt, T die Auslaugtemperatur darstellt, [*H*⁺] die festgelegte Wasserstoffionenkonzentration in der Lösung darstellt, t die aktuelle Zeit darstellt, *X_{Ni}* die Auslaugrate von Nickelionen in der Lösung zum aktuellen Zeitpunkt darstellt, ${X}_{Ni}^{∞}$ eine maximale Auslaugrate von Nickelionen in der Lösung darstellt und entsprechend der Zufuhrerzzusammensetzung, der Trübekonzentration und der Trübedurchflussrate berechnet wird;
wobei die Auslaugrate von Kobaltionen in der Lösung zum aktuellen Zeitpunkt gemäß folgender Formel erhalten wird: $0.303 \times {e}^{- \frac{3179}{RT}} \left[{H}^{+}\right] t = {\left(1-{\left(1-\frac{{X}_{Co}}{{X}_{Co}^{∞}}\right)}^{\frac{1}{3}}\right)}^{2} ,$
wobei R eine Gaskonstante darstellt, T die Auslaugtemperatur darstellt, [*H*⁺] die festgelegte Wasserstoffionenkonzentration in der Lösung darstellt, t die aktuelle Zeit darstellt, *X_{Co}* die Auslaugrate von Kobaltionen in der Lösung zum aktuellen Zeitpunkt darstellt, ${X}_{Co}^{∞}$ eine maximale Auslaugrate von Kobaltionen in der Lösung darstellt und entsprechend der Zufuhrerzzusammensetzung, der Trübekonzentration und der Trübedurchflussrate berechnet wird;
wobei die Auslaugrate von Aluminiumionen in der Lösung zum aktuellen Zeitpunkt gemäß folgender Formel erhalten wird: $2.68 \times {10}^{9} \times {e}^{- \frac{101.9 \times {10}^{3}}{RT}} \left[{H}^{+}\right] t = 1 - 3 {\left(1-\frac{{X}_{Al}}{{X}_{Al}^{∞}}\right)}^{\frac{2}{3}} + 2 \left(1-\frac{{X}_{Al}}{{X}_{Al}^{∞}}\right) ,$
wobei R eine Gaskonstante darstellt, T die Auslaugtemperatur darstellt, [*H*⁺] die festgelegte Wasserstoffionenkonzentration in der Lösung darstellt, t die aktuelle Zeit darstellt, *X_{Al}* die Auslaugrate von Aluminiumionen zum aktuellen Zeitpunkt in der Lösung darstellt, ${X}_{Al}^{∞}$ eine maximale Auslaugrate von Aluminiumionen in der Lösung darstellt und entsprechend der Zufuhrerzzusammensetzung, der Trübekonzentration und der Trübedurchflussrate berechnet wird;
wobei die Auslaugrate von Eisenionen in der Lösung zum aktuellen Zeitpunkt gemäß folgender Formel erhalten wird: $4.91 \times {10}^{8} \times {e}^{- \frac{93.03 \times {10}^{3}}{RT}} \left[{H}^{+}\right] t = 1 - 3 {\left(1-\frac{{X}_{Fe}}{{X}_{Fe}^{∞}}\right)}^{\frac{2}{3}} + 2 \left(1-\frac{{X}_{Fe}}{{X}_{Fe}^{∞}}\right) ,$
wobei R eine Gaskonstante darstellt, T die Auslaugtemperatur darstellt, [*H*⁺] die festgelegte Wasserstoffionenkonzentration in der Lösung darstellt, t die aktuelle Zeit darstellt, *X_{Fe}* die Auslaugrate von Eisenionen in der Lösung zum aktuellen Zeitpunkt darstellt, ${X}_{Fe}^{∞}$ eine maximale Auslaugrate von Eisenionen in der Lösung darstellt und entsprechend der Zufuhrerzzusammensetzung, der Trübekonzentration und der Trübedurchflussrate berechnet wird;
wobei entsprechend den Auslaugraten von Aluminiumionen und Eisenionen in der Lösung hydrolytische Ausfällungsmengen von Aluminiumionen und Eisenionen zum aktuellen Zeitpunkt erhalten werden, wobei die hydrolytische Ausfällungsmenge von Aluminiumionen zum aktuellen Zeitpunkt gemäß folgenden Formeln erhalten wird: $\frac{{dM}_{Al}}{dt} = 0.408 \left[{H}^{+}\right] \left({S}_{Al}-1\right) {M}_{Al}$ ${S}_{Al} = \frac{{C}_{Al}^{in} \times {X}_{Al}}{\left[{Al}_{2}{\left({SO}_{4}\right)}_{3}\left(aq\right)\right]}$ $lg \left(\frac{{\left[{H}^{+}\right]}^{5 / 2} {\left[{HSO}_{4}^{-}\right]}^{5 / 2}}{\left[{Al}_{2}{\left({SO}_{4}\right)}_{3}\left(aq\right)\right]}\right) = - \frac{4464}{T} + 3.774 + \frac{14.21 \sqrt{{I}_{c , {Al}_{2} {\left({SO}_{4}\right)}_{3}}}}{1 + 1.6 \sqrt{{I}_{c , {Al}_{2} {\left({SO}_{4}\right)}_{3}}}} - 1.667 \sqrt{{I}_{c , {Al}_{2} {\left({SO}_{4}\right)}_{3}}}$ ${I}_{c , {Al}_{2}} {\left({SO}_{4}\right)}_{3} = 1 / 2 \left(4∗\left[{SO}_{4}^{2 -}\right]+9∗\left[{Al}^{3 +}\right]\right)$ $\left[{HSO}_{4}^{-}\right] = \left[{H}^{+}\right] ,$
wobei T die Auslaugtemperatur darstellt, t die aktuelle Zeit darstellt, *M_{Al}* die aktuelle hydrolytische Ausfällungsmenge von Aluminiumionen in der Lösung zum aktuellen Zeitpunkt darstellt, [*H* ⁺] die festgelegte Wasserstoffionenkonzentration in der Lösung darstellt, *S_{Al}* eine Sättigung von Aluminiumionen in der Lösung darstellt, *X_{Al}* die Auslaugrate von Aluminiumionen in der Lösung darstellt, ${C}_{Al}^{in}$ eine Al-Konzentration in der Trübe darstellt und entsprechend der Zufuhrerzzusammensetzung, der Trübekonzentration und der Trübedurchflussrate berechnet wird, [*Al*₂(*SO*₄)₃(*aq*)] eine Löslichkeit von Aluminiumsulfat in der Lösung darstellt, $\left[{SO}_{4}^{2 -}\right]$ die erste Sulfatkonzentration in der Lösung zum aktuellen Zeitpunkt darstellt, [*Al* ³⁺] die Konzentration von Aluminiumionen in der Lösung darstellt und entsprechend der Zufuhrerzzusammensetzung, der Trübekonzentration und der Trübedurchflussrate berechnet wird, $\left[{HSO}_{4}^{-}\right]$ eine Konzentration von Wasserstoffsulfationen in der Lösung darstellt und *I*_{*c,Al*₂(*SO*₄})₃ eine Ionenstärke von *Al*₂(*SO*₄)₃ darstellt;
wobei die hydrolytische Ausfällungsmenge von Eisenionen zum aktuellen Zeitpunkt gemäß folgenden Formeln erhalten wird: $\frac{{M}_{Fe}}{\left[{Fe}_{2}{\left({SO}_{4}\right)}_{3}\left(aq\right)\right] \times {S}_{Fe}} = 0.0114 {S}_{Fe}^{2} - 0.254 {S}_{Fe} + 1.2483$ ${S}_{Fe} = 6.725 - 5.735 \frac{{X}_{Ni}}{{X}_{Ni}^{∞}}$ $lg \left(\frac{\left[{H}^{+}\right] \left[{HSO}_{4}^{-}\right]}{\left[{Fe}_{2}{\left({SO}_{4}\right)}_{3}\left(aq\right)\right]}\right) = - \frac{2740}{T} + 10.72 - \frac{9.905 \sqrt{{I}_{c , {Fe}_{2} {\left({SO}_{4}\right)}_{3}}}}{1 + 1.6 \sqrt{{I}_{c , {Fe}_{2} {\left({SO}_{4}\right)}_{3}}}} + 0.0294 \sqrt{{I}_{c , {Fe}_{2} {\left({SO}_{4}\right)}_{3}}}$ ${I}_{c , {Fe}_{2} {\left({SO}_{4}\right)}_{3}} = 1 / 2 \left(4∗\left[{SO}_{4}^{2 -}\right]+9∗\left[{Fe}^{3 +}\right]\right)$ $\left[{HSO}_{4}^{-}\right] = \left[{H}^{+}\right] ,$
wobei T die Auslaugtemperatur darstellt, *M_{Fe}* die hydrolytische Ausfällungsmenge von Eisenionen zum aktuellen Zeitpunkt darstellt, [H ⁺] die festgelegte Wasserstoffionenkonzentration in der Lösung darstellt, *S_{Fe}* eine Sättigung von Eisenionen in der Lösung darstellt, *X_{Ni}* die Auslaugrate von Nickelionen in der Lösung darstellt, [*Fe*₂(*SO*₄)₃(*aq*)] eine Löslichkeit von Eisensulfat in der Lösung darstellt, ${X}_{Fe}^{∞}$ eine maximale Auslaugrate von Nickelionen in der Lösung darstellt, $\left[{SO}_{4}^{2 -}\right]$ die erste Sulfatkonzentration von in der aktuellen Zeitlösung darstellt, [*Fe* ³⁺] die Konzentration von Eisenionen in der Lösung darstellt und entsprechend der Zufuhrerzzusammensetzung, der Trübekonzentration und der Trübedurchflussrate berechnet wird, $\left[{HSO}_{4}^{-}\right]$ eine Konzentration von Wasserstoffsulfationen in der Lösung darstellt und *I*_{*c,Al*₂(*SO*₄)₃} eine Ionenstärke von [*Fe*₂(*SO*₄)₃ darstellt;
wobei das Erhalten einer ersten Sulfatkonzentration in der Lösung zum aktuellen Zeitpunkt entsprechend den hydrolytischen Ausfällungsmengen von Aluminiumionen und Eisenionen zum festgelegten aktuellen Zeitpunkt und der festgelegten aktuellen Durchflussrate von Schwefelsäure Folgendes umfasst:
entsprechend der aktuellen festgelegten Durchflussrate von Schwefelsäure, Erhalten einer Gesamtsulfatkonzentration;
entsprechend den hydrolytischen Ausfällungsmengen von Aluminiumionen und Eisenionen zum aktuellen Zeitpunkt, Erhalten eines Sulfatgehalts in Hydrolyseausfällung;
entsprechend der Gesamtsulfatkonzentration und dem Sulfatgehalt im Hydrolyseausfällungsprodukt, Erhalten der ersten Sulfatkonzentration in Lösung zum aktuellen Zeitpunkt;
wobei der ersten Sulfatkonzentration mit der zweiten Sulfatkonzentration verglichen wird, wenn die erste Sulfatkonzentration und die zweite Sulfatkonzentration nicht gleich sind, die festgelegte Wasserstoffionenkonzentration in der Lösung korrigiert wird und die vorstehenden Schritte wiederholt durchgeführt werden, bis die erste Sulfatkonzentration und die zweite Sulfatkonzentration gleich sind, die festgelegte Wasserstoffionenkonzentration in der aktuellen Lösung als tatsächliche Wasserstoffionenkonzentration ausgegeben wird, die festgelegte Wasserstoffionenkonzentration in der Lösung gemäß folgender Formel korrigiert wird: $\left[{H}^{+}\right] \left(nach Korrektur\right) = \left(vor Korrektur\right) \left.+k\right) \left[{H}^{+}\right] \times \left({SO}_{4}*-{SO}_{4}**\right) ,$
wobei [*H ⁺*](*nach Korrektur)* eine korrigierte festgelegte Wasserstoffionenkonzentration darstellt, [*H ⁺*](*vor Korrektur)* die aktuell festgelegte Wasserstoffionenkonzentration darstellt, *SO*₄* die erste Sulfatkonzentration darstellt, *SO*₄** die zweite Sulfatkonzentration darstellt und k einen Anteilskoeffizienten darstellt;
wobei entsprechend der Zufuhrerzzusammensetzung, der Trübekonzentration, der Trübedurchflussrate, der festgelegten Durchflussrate von Schwefelsäure und der festgelegten Wasserstoffionenkonzentration in der Lösung Auslaugraten von Nickelionen, Kobaltionen, Aluminiumionen und Eisenionen in der Lösung zum aktuellen Zeitpunkt erhalten werden, wobei die theoretische Auslaugrate von Nickel, wenn eine Auslaugzeit die Trübedauerzeit im Autoklaven bei einer aktuellen Durchflussrate von Schwefelsäure erreicht, nach folgender Formel erhalten wird: $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
wobei R eine Gaskonstante darstellt, T die Auslaugtemperatur darstellt, [*H*⁺] die Wasserstoffionenkonzentration in der Lösung zu einem Zeitpunkt t darstellt, t die aktuelle Zeit darstellt, *X_{Ni}* die Auslaugrate von Nickelionen in der Lösung zum aktuellen Zeitpunkt darstellt, ${X}_{Ni}^{∞}$ eine maximale Auslaugrate von Nickelionen in der Lösung darstellt und entsprechend der Zufuhrerzzusammensetzung, der Trübekonzentration und der Trübedurchflussrate berechnet wird.

2. Dynamisches Optimierungsverfahren für das Säure-Erz-Verhältnis bei der Hochdruckauslaugung von Laterit-Nickelerz nach Anspruch 1, wobei das Vergleichen der theoretischen Auslaugrate von Nickel mit der Zielauslaugrate von Nickel; wenn die theoretische Auslaugrate von Nickel nicht der Zielauslaugrate von Nickel entspricht, das Anpassen der festgelegten Durchflussrate der Schwefelsäure und das wiederholte Durchführen der vorstehenden Schritte, bis die theoretische Auslaugrate von Nickel der Zielauslaugrate von Nickel entspricht, Folgendes umfassen:
wenn die theoretische Auslaugrate von Nickel größer ist als die Zielauslaugrate von Nickel, Reduzieren der Durchflussrate von Schwefelsäure; und
wenn die theoretische Auslaugrate von Nickel kleiner ist als die Zielauslaugrate von Nickel, Erhöhen der Durchflussrate der Schwefelsäure.

## Revendications

1. Procédé d'optimisation dynamique pour le rapport acide-minerai dans la lixiviation à haute pression du minerai de nickel latéritique, comportant :
l'obtention d'une composition de minerai entrant, d'une concentration en pulpe, d'un débit de pulpe, d'une température de lixiviation et d'un temps de rétention de pulpe dans un autoclave, et le réglage d'un taux de lixiviation cible de nickel ;
le réglage d'un débit d'acide sulfurique ;
en fonction du débit réglé d'acide sulfurique, de la composition de minerai entrant, de la concentration en pulpe, du débit de pulpe et de la température de lixiviation, l'obtention d'une relation entre une concentration en ions hydrogène dans une solution et un temps de réaction ;
en fonction de la relation entre la concentration en ions hydrogène dans la solution et le temps de réaction, la composition de minerai entrant, la concentration en pulpe, le débit de pulpe et le temps de rétention de pulpe dans l'autoclave, l'obtention d'un taux de lixiviation théorique du nickel lorsqu'un temps de lixiviation atteint le temps de rétention de pulpe dans l'autoclave à un débit actuel d'acide sulfurique ;
la comparaison du taux de lixiviation théorique du nickel avec le taux de lixiviation cible du nickel ; si le taux de lixiviation théorique du nickel n'est pas égal au taux de lixiviation cible du nickel, l'ajustement du débit réglé de l'acide sulfurique, la réalisation répétée des étapes précédentes jusqu'à ce que le taux de lixiviation théorique du nickel soit égal au taux de lixiviation cible du nickel, la sortie du débit actuel d'acide sulfurique en tant que débit optimal d'acide sulfurique, et le calcul d'un rapport acide-minerai optimal correspondant ; et
en fonction du rapport acide-minerai optimal, l'ajustement d'un degré d'ouverture d'une vanne de régulation de débit d'acide sulfurique de l'autoclave pour s'assurer qu'un processus de lixiviation acide à haute pression réel est effectué dans des conditions de rapport acide-minerai optimales en permanence ;
dans lequel en fonction du débit réglé de l'acide sulfurique, de la composition minérale entrant, de la concentration en pulpe, du débit de pulpe et de la température de lixiviation, l'obtention d'une relation entre une concentration en ions hydrogène dans une solution et un temps de réaction comporte :
le réglage d'un moment actuel et d'une concentration en ions hydrogène dans la solution dans une condition du débit actuel d'acide sulfurique ;
en fonction de la composition de minerai entrant, de la concentration en pulpe, du débit de pulpe, du débit réglé d'acide sulfurique, et de la concentration réglée en ions hydrogène dans la solution, l'obtention de taux de lixiviation d'ions nickel, d'ions cobalt, d'ions aluminium, et d'ions fer dans la solution au moment actuel ;
en fonction des taux de lixiviation d'ions aluminium et d'ions fer dans la solution, l'obtention de quantités de précipitation hydrolytique d'ions aluminium et d'ions fer au moment actuel ;
en fonction des quantités de précipitation hydrolytique d'ions aluminium et d'ions fer au moment actuel réglé et du débit actuel réglé d'acide sulfurique, l'obtention d'une première concentration en sulfate dans la solution au moment actuel ;
en fonction des concentrations en ions nickel, ions cobalt, ions aluminium et ions fer dans la solution au moment actuel, l'obtention d'une deuxième concentration en sulfates dans la solution au moment actuel ; et
la comparaison de la première concentration en sulfate avec la deuxième concentration en sulfate, si la première concentration en sulfate et la deuxième concentration en sulfate ne sont pas égales, la correction de la concentration en ions hydrogène réglée dans la solution, et la réalisation répétée des étapes précédentes jusqu'à ce que la première concentration en sulfate et la deuxième concentration en sulfate soient égales, la sortie de la concentration en ions hydrogène réglée dans la solution actuelle en tant que concentration réelle en ions hydrogène ;
dans lequel en fonction de la composition de minerai entrant, de la concentration en pulpe, du débit de pulpe, du débit réglé d'acide sulfurique, et de la concentration réglée en ions hydrogène dans la solution, l'obtention de taux de lixiviation d'ions nickel, d'ions cobalt, d'ions aluminium, et d'ions fer dans la solution au moment actuel, le taux de lixiviation d'ions nickel dans la solution au moment actuel est obtenu selon une formule comme suit : $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
dans laquelle R représente une constante de gaz, T représente la température de lixiviation, [*H*⁺] représente la concentration réglée en ions hydrogène dans la solution, t représente le moment actuel, *X_{Ni}* représente le taux de lixiviation d'ions nickel dans la solution au moment actuel, ${X}_{Ni}^{∞}$ représente un taux de lixiviation maximal d'ions nickel dans la solution, et est calculé en fonction de la composition de minerai entrant, de la concentration en pulpe et du débit de pulpe ;
dans lequel le taux de lixiviation d'ions cobalt dans la solution au moment actuel est obtenu selon une formule comme suit : $0.303 \times {e}^{- \frac{3179}{RT}} \left[{H}^{+}\right] t = {\left(1-{\left(1-\frac{{X}_{Co}}{{X}_{Co}^{∞}}\right)}^{\frac{1}{3}}\right)}^{2} ,$
dans laquelle R représente une constante de gaz, T représente la température de lixiviation, [*H*⁺] représente la concentration réglée en ions hydrogène dans la solution, t représente le moment actuel, *X_{Co}* représente le taux de lixiviation d'ions cobalt dans la solution au moment actuel, ${X}_{Co}^{∞}$ représente un taux de lixiviation maximal d'ions cobalt dans la solution, et est calculé en fonction de la composition de minerai entrant, de la concentration en pulpe et du débit de pulpe ;
dans lequel le taux de lixiviation d'ions aluminium dans la solution au moment actuel est obtenu selon une formule comme suit : $2.68 \times {10}^{9} \times {e}^{- \frac{101.9 \times {10}^{3}}{RT}} \left[{H}^{+}\right] t = 1 - 3 {\left(1-\frac{{X}_{Al}}{{X}_{Al}^{∞}}\right)}^{\frac{2}{3}} + 2 \left(1-\frac{{X}_{Al}}{{X}_{Al}^{∞}}\right) ,$
dans laquelle R représente une constante de gaz, T représente la température de lixiviation, [*H*⁺] représente la concentration réglée en ions hydrogène dans la solution, t représente le moment actuel, *X_{Al}* représente le taux de lixiviation d'ions aluminium au moment actuel dans la solution, ${X}_{Al}^{∞}$ représente un taux de lixiviation maximal d'ions aluminium dans la solution, et est calculé en fonction de la composition de minerai entrant, de la concentration en pulpe, et du débit de pulpe ;
dans lequel le taux de lixiviation d'ions fer dans la solution au moment actuel est obtenu selon une formule comme suit : $4.91 \times {10}^{8} \times {e}^{- \frac{93.03 \times {10}^{3}}{RT}} \left[{H}^{+}\right] t = 1 - 3 {\left(1-\frac{{X}_{Fe}}{{X}_{Fe}^{∞}}\right)}^{\frac{2}{3}} + 2 \left(1-\frac{{X}_{Fe}}{{X}_{Fe}^{∞}}\right) ,$
dans laquelle R représente une constante de gaz, T représente la température de lixiviation, [*H*⁺] représente la concentration réglée en ions hydrogène dans la solution, t représente le moment actuel, *X_{Fe}* représente le taux de lixiviation d'ions fer dans la solution au moment actuel, ${X}_{Fe}^{∞}$ représente un taux de lixiviation maximal d'ions fer dans la solution, et est calculé en fonction de la composition de minerai entrant, de la concentration en pulpe et du débit de pulpe ;
dans lequel en fonction des taux de lixiviation d'ions aluminium et d'ions fer dans la solution, l'obtention de quantités de précipitation hydrolytique d'ions aluminium et d'ions fer au moment actuel, la quantité de précipitation hydrolytique d'ions aluminium au moment actuel est obtenue selon les formules comme suit : $\frac{{dM}_{Al}}{dt} = 0.408 \left[{H}^{+}\right] \left({S}_{Al}-1\right) {M}_{Al}$ ${S}_{Al} = \frac{{C}_{Al}^{in} \times {X}_{Al}}{\left[{Al}_{2}{\left({SO}_{4}\right)}_{3}\left(aq\right)\right]}$ $lg \left(\frac{{\left[{H}^{+}\right]}^{5 / 2} {\left[{HSO}_{4}^{-}\right]}^{5 / 2}}{\left[{Al}_{2}{\left({SO}_{4}\right)}_{3}\left(aq\right)\right]}\right) = - \frac{4464}{T} + 3.774 + \frac{14.21 \sqrt{{I}_{c , {Al}_{2} {\left({SO}_{4}\right)}_{3}}}}{1 + 1.6 \sqrt{{I}_{c , {Al}_{2} {\left({SO}_{4}\right)}_{3}}}} - 1.667 \sqrt{{I}_{c , {Al}_{2} {\left({SO}_{4}\right)}_{3}}}$ ${I}_{c , {Al}_{2} {\left({SO}_{4}\right)}_{3}} = 1 / 2 \left(4∗\left[{SO}_{4}^{2 -}\right]+9∗\left[{Al}^{3 +}\right]\right)$ $\left[{HSO}_{4}^{-}\right] = \left[{H}^{+}\right] ,$
dans lesquelles T représente la température de lixiviation, t représente le moment actuel, *M_{Al}* représente la quantité de précipitation hydrolytique actuelle d'ions aluminium dans la solution au moment actuel, [*H*⁺] représente la concentration réglée en ions hydrogène dans la solution, *S_{Al}* représente une saturation d'ions aluminium dans la solution, *X_{Al}* représente le taux de lixiviation d'ions aluminium dans la solution, ${C}_{Al}^{in}$ représente une concentration en Al dans la pulpe, et est calculée en fonction de la composition de minerai entrant, de la concentration en pulpe et du débit de pulpe, [*Al*₂(*SO*₄)₃(*aq*)] représente une solubilité du sulfate d'aluminium dans la solution, $\left[{SO}_{4}^{2 -}\right]$ représente la première concentration en sulfate dans la solution au moment actuel, [A*l³⁺*] représente la concentration en ions aluminium dans la solution, et est calculée en fonction de la composition de minerai entrant, de la concentration en pulpe, et du débit de pulpe, $\left[{HSO}_{4}^{-}\right]$ représente une concentration en ions sulfate d'hydrogène dans la solution, et *I*_{*c,Al*₂(*SO*₄)₃} représente une force ionique d'*Al*₂*(SO₄)₃* ;
dans lequel la quantité de précipitation hydrolytique d'ions fer au moment actuel est obtenue selon les formules comme suit : $\frac{{M}_{Fe}}{\left[{Fe}_{2}{\left({SO}_{4}\right)}_{3}\left(aq\right)\right] \times {S}_{Fe}} = 0.0114 {S}_{Fe}^{2} - 0.254 {S}_{Fe} + 1.2483$ ${S}_{Fe} = 6.725 - 5.735 \frac{{X}_{Ni}}{{X}_{Ni}^{∞}}$ $lg \left(\frac{\left[{H}^{+}\right] \left[{HSO}_{4}^{-}\right]}{\left[{Fe}_{2}{\left({SO}_{4}\right)}_{3}\left(aq\right)\right]}\right) = - \frac{2740}{T} + 10.72 - \frac{9.905 \sqrt{{I}_{c , {Fe}_{2} {\left({SO}_{4}\right)}_{3}}}}{1 + 1.6 \sqrt{{I}_{c , {Fe}_{2} {\left({SO}_{4}\right)}_{3}}}} + 0.0294 \sqrt{{I}_{c , {Fe}_{2} {\left({SO}_{4}\right)}_{3}}}$ ${I}_{c , {Fe}_{2} {\left({SO}_{4}\right)}_{3}} = 1 / 2 \left(4∗\left[{SO}_{4}^{2 -}\right]+9∗\left[{Fe}^{3 +}\right]\right)$ $\left[{HSO}_{4}^{-}\right] = \left[{H}^{+}\right] ,$
dans lesquelles T représente la température de lixiviation, *M_{Fe}* représente la quantité de précipitation hydrolytique d'ions fer au moment actuel, [*H*⁺] représente la concentration réglée en ions hydrogène dans la solution, *S_{Fe}* représente une saturation d'ions fer dans la solution, *X_{Ni}* représente le taux de lixiviation d'ions nickel dans la solution, [*Fe*₂(*SO*₄)₃(*aq*)] représente une solubilité du sulfate de fer dans la solution, ${X}_{Fe}^{∞}$ représente un taux maximal de lixiviation d'ions nickel dans la solution, $\left[{SO}_{4}^{2 -}\right]$ représente la première concentration en sulfate de dans la solution actuelle, [*Fe*³⁺] représente la concentration en ions fer dans la solution, et est calculée en fonction de la composition de minerai entrant, de la concentration en pulpe et du débit de pulpe, $\left[{HSO}_{4}^{-}\right]$ représente une concentration en ions sulfate d'hydrogène dans la solution, et *I*_{*c,Al*2(*SO*₄)₃} représente une force ionique de [*Fe*₂(*SO*₄)₃ ;
dans lequel en fonction des quantités de précipitation hydrolytique d'ions aluminium et d'ions fer au moment actuel réglé et du débit actuel réglé d'acide sulfurique, l'obtention d'une première concentration en sulfate dans la solution au moment actuel comporte :
en fonction du débit actuel réglé d'acide sulfurique, l'obtention d'une concentration totale en sulfate ;
en fonction des quantités de précipitation hydrolytique d'ions aluminium et d'ions fer au moment actuel, l'obtention d'une teneur en sulfate dans le précipité d'hydrolyse ;
en fonction de la concentration totale en sulfate et de la teneur en sulfate dans le précipité d'hydrolyse, l'obtention de la première concentration en sulfate dans la solution au moment actuel ;
dans lequel la comparaison de la première concentration en sulfate avec la deuxième concentration en sulfate, si la première concentration en sulfate et la deuxième concentration en sulfate ne sont pas égales, la correction de la concentration réglée en ions hydrogène dans la solution, et la réalisation répétée des étapes précédentes jusqu'à ce que la première concentration en sulfate et la deuxième concentration en sulfate soient égales, la sortie de la concentration réglée en ions hydrogène dans la solution actuelle en tant que concentration réelle en ions hydrogène, la concentration réglée en ions hydrogène dans la solution est corrigée selon une formule comme suit : $\left[{H}^{+}\right] \left(après correction\right) = \left(avant correction\right) \left.+k\right) \left[{H}^{+}\right] \times \left({SO}_{4}*-{SO}_{4}**\right) ,$
dans laquelle [*H⁺*](*après correction*) représente une concentration réglée corrigée en ions hydrogène, [*H⁺*](*avant correction*) représente la concentration réglée actuelle en ions hydrogène, SO₄* représente la première concentration en sulfate, *SO*₄** représente la deuxième concentration en sulfate, et k représente un coefficient proportionnel ;
dans lequel en fonction de la composition de minerai entrant, de la concentration en pulpe, du débit de pulpe, du débit réglé d'acide sulfurique, et de la concentration réglée en ions hydrogène dans la solution, l'obtention des taux de lixiviation d'ions nickel, d'ions cobalt, d'ions aluminium, et d'ions fer dans la solution au moment actuel, le taux de lixiviation théorique du nickel lorsqu'un temps de lixiviation atteint le temps de rétention de pulpe dans l'autoclave à un débit actuel d'acide sulfurique est obtenu selon une formule comme suit : $7.806 \times {10}^{7} \times {e}^{- \frac{87.75 \times {10}^{3}}{RT}} \left[{H}^{+}\right] t = 1 - 3 {\left(1-\frac{{X}_{Ni}}{{X}_{Ni}^{∞}}\right)}^{\frac{2}{3}} + 2 \left(1-\frac{{X}_{Ni}}{{X}_{Ni}^{∞}}\right) ,$
dans laquelle R représente une constante de gaz, T représente la température de lixiviation, [*H*⁺] représente la concentration en ions hydrogène dans la solution à un moment t, t représente le moment actuel, *X_{Ni}* représente le taux de lixiviation d'ions nickel dans la solution au moment actuel, ${X}_{Ni}^{∞}$ représente un taux de lixiviation maximal d'ions nickel dans la solution, et est calculé en fonction de la composition de minerai entrant, de la concentration en pulpe et du débit de pulpe.

2. Procédé d'optimisation dynamique pour le rapport acide-minerai dans la lixiviation à haute pression de minerai de nickel latéritique selon la revendication 1, dans lequel la comparaison du taux de lixiviation théorique du nickel avec le taux de lixiviation cible du nickel ; si le taux de lixiviation théorique du nickel n'est pas égal au taux de lixiviation cible du nickel, l'ajustement du débit réglé de l'acide sulfurique, la réalisation répétée des étapes précédentes jusqu'à ce que le taux de lixiviation théorique du nickel soit égal au taux de lixiviation cible du nickel, comporte :
si le taux de lixiviation théorique du nickel est supérieur au taux de lixiviation cible du nickel, la réduction du débit d'acide sulfurique ; et
si le taux de lixiviation théorique du nickel est inférieur au taux de lixiviation cible du nickel, l'augmentation du débit d'acide sulfurique.
